# EUROPEAN PATENT APPLICATION

(11) **EP 2 654 250 A2**
(43) Date of publication of application: **23.10.2013**
(21) Application number: 11755710.8
(22) Date of filing: 27.04.2011
(51) Int. Cl.: H04L 12/56

(54) **VIRTUAL LOCAL AREA NETWORK IDENTITY TRANSFORMATION METHOD AND APPARATUS**

(71) Applicant: Huawei Technologies Co., Ltd., Shenzhen, Guangdong 518129 (CN)
(72) Inventor: LI, Yizhou, Guangdong 518129 (CN)
(74) Representative: Thun, Clemens
(86) International application number: PCT/CN2011/073381
(87) International publication number: WO 2011/113393

(57) **Abstract**

Embodiments of the present invention disclose a method and an apparatus for converting a virtual local area network identity, which are used to avoid the problems of a huge workload and serious configuration speed lag which are generated because a service information table between services of other routing bridges supporting a same service as a routing bridge and local virtual local area network identities of other routing bridges is manually configured on the routing bridge. The method in the embodiments of the present invention includes: obtaining and storing a service information table sent by each routing bridge; receiving a data packet in TRILL encapsulation sent by a source terminal, and forwarded by a neighboring routing bridge; querying the stored service information table, and converting a virtual local area network identity in the received data packet into a local virtual local area network identity; and sending the data packet with the converted virtual local area network identity to a destination terminal.

## Description

### FIELD

The present invention relates to the field of network communications technologies, and in particular, to a method and an apparatus for converting a virtual local area network identity.

### BACKGROUND

In a conventional layer 2 network, the virtual local area network identity (VID, VLAN IDentity) of each virtual local area network (VLAN, Virtual Local Area Network) is unique. After the VID of a VLAN is determined, other VLANs in the network cannot use the same VID, and any node in the VLAN can only be identified by the VID. Because the length of the VID is 12 bits, at most about 4,000 VLANs can be identified in the network. Even if each user uses only one VLAN, the number of users is limited to the range of approximately 4,000. The transparent interconnection of lots of links protocol (TRILL, Transparent Interconnection of Lots of Links) is a working group of the Internet Engineering Task Force (IETF, Internet Engineering Task Force), and is also a protocol. It mainly integrates advantages of a bridge and a router, applies a link state routing (LSR, Link State Routing) technology at a link layer, and does not interfere with the work of an upper-layer router. The TRILL protocol is developed to replace the spanning tree protocol (STP, Spanning Tree Protocol). It has three main advantages: 1. replacing the degenerative STP technology; 2. improving support for unicast and multicast in multi-pathing (Multi-Pathing); and 3. reducing delay of data transmission.

As applications of layer 2 routing protocols such as TRILL and deployment of virtual servers are gradually mature, it is expectable that a layer 2 network can support a larger number of virtual servers in the future. In such a scenario, if we use the VLAN technology to perform natural layer 2 isolation between services or customers, the number of required VLANs will be far greater than 4,000. However, as described above, usually VIDs can identify at most 4,000 VLANs. Therefore, the practice of identifying a VLAN by a VID in the conventional network is infeasible in this scenario. To solve the problem, a method for localizing VLAN IDs may be used. To be specific, for a designated service or customer, different VIDs may be used in different switch racks, thereby improving a reuse rate of the VIDs, so that each rack has 4,000 available VIDs finally.

After the VIDs are localized, because a same service may use different VLANs in different switch racks, and nodes belonging to different VLANs cannot directly communicate, causing that different nodes belonging to a same service cannot directly communicate with each other. To overcome the above problem, some designated switches in each switch rack supporting a same service need to convert different VIDs before forwarding data packets, and also store mappings between VIDs of each service in different racks. In the TRILL protocol, a switch supporting the TRILL protocol is a routing bridge (RB, Route Bridge), but VIDs are usually manually configured on the RB, which leads to a huge workload. In addition, a virtual server may be migrated to other switch racks in real time. If a switch rack to which the virtual server is migrated does not have a server supporting the same services as the virtual server, new VIDs need to be configured in the switch rack for the services supported by the virtual server. In addition, the mappings between the VIDs corresponding to the services supported by the virtual server and the VIDs allocated by other switches for the services need to be configured on other RBs. The lag of manual configuration inevitably causes delay of the services.

### SUMMARY

Embodiments of the present invention provide a method and an apparatus for converting a virtual local area network identity, which can avoid the problems of a huge workload and serious configuration lag which are generated because mappings between virtual local area network identities and virtual local area network identities of routing bridges in other switch racks are manually configured on a routing bridge.

A method for converting a virtual local area network identity according to an embodiment of the present invention includes: obtaining and storing a service information table sent by each routing bridge RB, where the service information table includes mapping among services supported by each RB, an identity of each RB, and local virtual local area network identities VIDs of the services supported by each RB; receiving a data packet in TRILL encapsulation, sent by a source terminal and forwarded by a neighboring RB; querying the stored service information table, and converting a VID in the data packet into a local VID; and sending the data packet with the converted VID to a destination terminal.

An apparatus for converting a virtual local area network identity according to an embodiment of the present invention includes: an obtaining unit, configured to obtain a service information table sent by each RB; a storing unit, configured to store the service information table sent by each RB and obtained by the obtaining unit; a receiver, configured to receive a data packet in TRILL encapsulation, sent by a source terminal and forwarded by a neighboring RB; a querying unit, configured to query the service information table stored by the storing unit; a converting unit, configured to convert a VID carried in the data packet into a local VID according to a query result of the querying unit after querying the service information table; and a transmitter, configured to send the data packet with the converted VID to a destination terminal.

As seen from the above technical solutions, in the embodiments of the present invention, the service information table of each routing bridge can be dynamically obtained and stored; after an RB receives a data packet whose egress RB is the RB itself, the RB queries the stored service information table according to the ingress RB in the data packet and the VID information of the inner-layer packet to obtain information of a local VID to be converted into, and when a virtual machine is migrated, service information tables in the whole network can be updated in real time. This avoids the shortage of VIDs caused by use of a globally unique VID by each service, and a huge configuration workload and configuration lag caused by manual configuration of local VIDs.

### BRIEF DESCRIPTION OF THE DRAWINGS

FIG. 1 is a schematic diagram of globalizing a virtual local area network;
FIG. 2 is a schematic diagram of converting a virtual local area network identity according to an embodiment of the present invention;
FIG. 3 is a schematic diagram of a process of forwarding and encapsulating a data packet in the TRILL protocol according to an embodiment of the present invention;
FIG. 4 is a schematic diagram of an embodiment of a method for converting a virtual local area network identity according to an embodiment of the present invention;
FIG. 5 is a schematic diagram of a use scenario of converting a virtual local area network identity according to an embodiment of the present invention;
FIG. 6 is a schematic diagram of another embodiment of a method for converting a virtual local area network identity according to an embodiment of the present invention; and
FIG. 7 is a schematic diagram of an embodiment of an apparatus for converting a virtual local area network identity according to an embodiment of the present invention.

### DETAILED DESCRIPTION OF THE EMBODIMENTS

Embodiments of the present invention provide a method and an apparatus for converting a virtual local area network identity, which are used to avoid the problems of a huge workload and serious configuration speed lag which are generated because a service information table between services of other RBs supporting a same service as an RB and local VIDs of other RBs is manually configured on the RB.

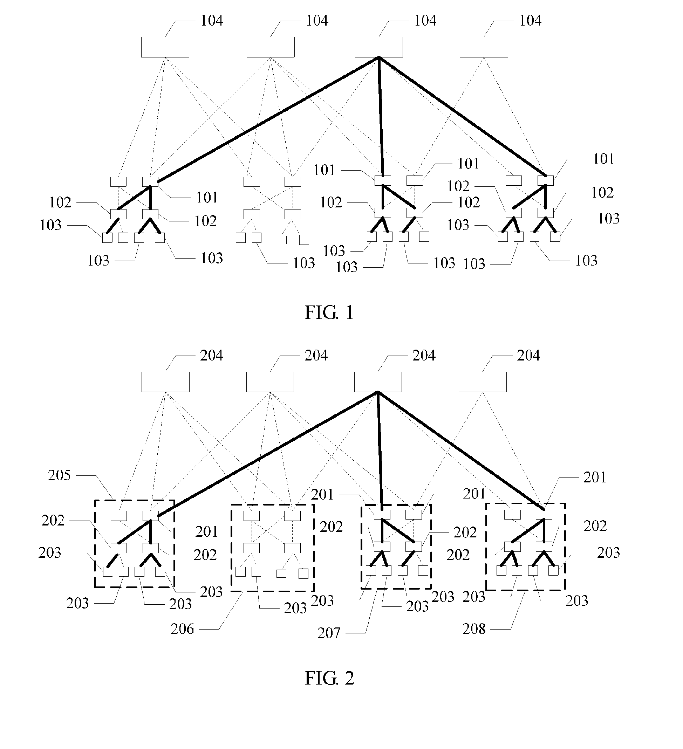

For ease of understanding, VLAN globalization in the TRILL protocol is described first. Referring to FIG. 1, the thick solid line indicates a virtual local area network service1 used by user A, and all switches are switches having TRILL functions (namely, RBs), where a top of rack (ToR, Top of Rack) is an RB at the top layer of a rack. In FIG. 1, 101 is a ToR, 102 is a virtual switch, 103 is a terminal, which may be a virtual machine (VM, Virtual Machine), and 104 is a relay RB only participating in packet forwarding (devices at the same layer in the network are of the same type, and are not illustrated in FIG. 1 one by one, but their functions are the same as those of the illustrated devices). In the conventional layer 2 network, the ID of each virtual local area network VLAN is unique. After the VID of a VLAN is determined, other VLANs in the network cannot use the VID, and each node of the VLAN can only use the VID. Assuming that a VID 38 is used to identify service1, the VID 38 cannot be used to identify other virtual local area networks, and each node belonging to the virtual local area network service1 can only use the VID 38 as an identity.

The following describes VID localization. The VID localization means that for a designated service or customer, different VIDs may be used in different switch racks to identify the service or customer. Referring to FIG. 2, the thick solid line indicates a virtual local area network service1 used by user B, 201 is a ToR, 202 is a virtual switch, 203 is a terminal, and 204 is a relay RB only participating in packet forwarding (devices at the same layer in the network are of the same type, and are not illustrated in FIG. 2 one by one, but their functions are the same as those of the illustrated devices). 205-208 are different switch racks (Rack). The VID allocated by the Rack 205 for the virtual local area network service1 is 35; the VID allocated by the Rack 207 for the virtual local area network service1 is 1028; the VID allocated by the Rack 208 for the virtual local area network service1 is 314; because no terminal of the service1 exists under the Rack 206, no VID is allocated for the service1 by Rack 206. When a virtual server in the virtual local area network service1 is migrated from the Rack 205 to the Rack 206, if the VID 35 is already allocated in the Rack 206 for another user to use, a VID must be allocated from the unused VIDs in the Rack 206 for the virtual local area network service1 to use in the Rack 206, for example, a VID 998, thereby improving a reuse rate of VIDs.

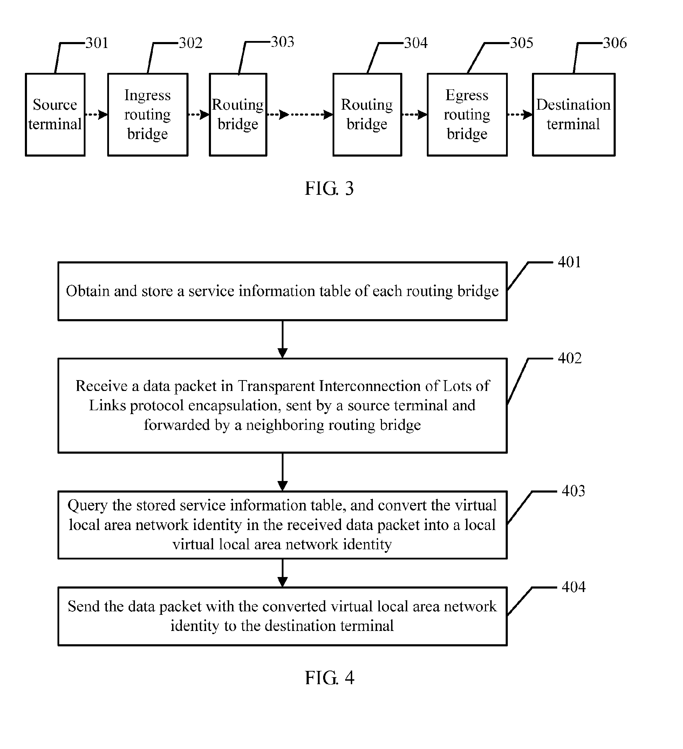

For ease of understanding, the following describes the process of forwarding and encapsulating a data packet in the TRILL protocol in brief. Taking a unicast data packet as an example, referring to FIG. 3, in the TRILL protocol, assuming that a source terminal 301 is ready to send a data packet to a destination terminal 306, after the data packet is sent, the RB first receiving the data packet is an ingress (ingress) RB, for example, the ingress RB 302 in FIG. 3 which is responsible for performing TRILL encapsulation for the data packet. The RB 302 finds the last RB on the forwarding path according to a destination MAC address, where the last RB is called an egress (egress) RB, such as the egress RB 305 in FIG. 3. The ingress RB 302 uses the identity of the egress RB 305 as the nickname of the egress routing bridge (Egress Rbridge Nickname), and uses its own identity as the nickname of the ingress routing bridge device (Ingress RBridge Nickname), and places the nicknames in the TRILL header. A dynamic protocol runs among all the RBs to obtain the nickname (nickname) of each RB. For a multicast or broadcast packet, the egress RB nickname indicates a distribution tree, and is the root of the distribution tree. The ingress RB is responsible for selecting a distribution tree to perform multicast or broadcast forwarding. The intermediate RBs, for example, the RB 303 and RB 304 in FIG. 3, between the ingress RB and the egress RB are responsible for forwarding the data packet. The intermediate RBs decide the layer 2 address of the next hop (Hop) RB according to the egress RB every time when receiving a data packet, uses the layer 2 address as the destination address of the outer layer 2 packet header, uses its own layer 2 address as the source address of the outer layer 2 packet header, and decreases the value of the hop count (Hop Count). Though each hop of the outer layer 2 packet header changes, the original packet (namely, the inner-layer packet) content does not change and is finally sent to the destination terminal 306. It should be noted that the VID information carried in the data packet remains unchanged in the whole forwarding process; only an RB configured with the virtual local area network mapping (VLAN mapping) function can change the VID.

The following describes the method for converting a virtual local area network identity according to an embodiment of the present invention. Referring to FIG. 4, an embodiment of a method for converting a virtual local area network identity in the TRILL protocol according to an embodiment of the present invention includes the following:

401. Obtain and store a service information table of each routing bridge, where the service information table includes mappings among services supported by each routing bridge, an identity of each routing bridge, and local virtual local area network identities of the services supported by each routing bridge.

In this step, in each RB, a service information table corresponding to the RB needs to be established according to the services (each service corresponds to a VLAN) supported by the RB, the identity of the RB, and local VIDs allocated for the services supported by the RB. Then each RB sends its own service information table to a neighboring RB through a link state packet, and the neighboring RB continues forwarding the state packet, so that the service information table is spread in the network. Finally, all RBs can obtain the service information table of each RB in the whole network, that is, each RB stores the local VIDs of other RBs with respect to a same service.

The service in the above service information table may be indicated by a uniformly agreed service number, for example, service1 for a voice service, service2 for a data service, and service3 for a video service. The identity of the RB may be a system identity or a nickname (nickname) of the RB.

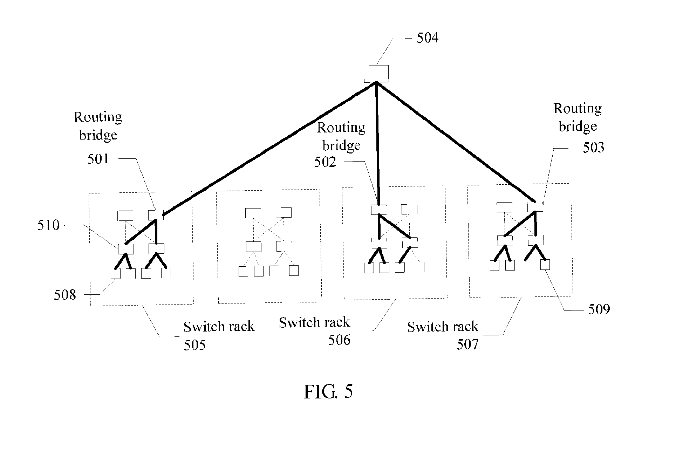

For ease of understanding, referring to FIG. 5, FIG. 5 is a schematic diagram of a use scenario of a method for converting a virtual local area network identity according to an embodiment of the present invention, including: switch racks Rack505 to Rack507, and routing bridges RB501 to RB503 in the switch racks 505 to 507 and a relay RB504. It is assumed that the user A leases a service with the service number 1, namely, the service1 (the virtual local area network corresponding to the service1 is shown by the thick solid line in FIG. 5). The VID configured by the Rack505 for the service1 is 35, the VID configured by the Rack506 for the service1 is 1028, and the VID configured by the Rack507 for the service1 is 314.

A service information table is configured on each RB. For example, assuming that the nickname of the RB501 is ToR1, the nickname of the RB502 is ToR2, and the nickname of the RB503 is ToR3, for the service1, the service information table on the RB501 is (service1: ToR1, VID35), the service information table on the RB502 is (service1: ToR2, VID1028), and the service information table on the RB503 is (service1: ToR3, VID314). Each RB supporting the service service1 sends its service information table to a neighboring RB, and then the neighboring RB continues forwarding, and spreads the service information table in the network. Finally, all the RBs supporting the service service1 store the service information table of each RB, where the service information table includes the information of each RB supporting the service1 and information of the local VID of the RB. It is understandable that the service number may also be a user group number.

It should be noted that the service information table may be stored in a link state database (LSDB, Link State Data Base). The service information table configured on each RB may be implemented by extending the TLV (Type, Length, Value) in an LSP packet of the Intermediate System to Intermediate System Routing Protocol (IS-IS, Intermediate System to Intermediate System Routing Protocol). For example, a new TLV may be defined, where the TLV may be named as user-group-to-vlan mapping TLV, or a sub-TLV of an existing TLV may be defined and may be named as user-group-to-vlan mapping sub-TLV, where the format of the new TLV or the sub-TLV may be shown as follows:

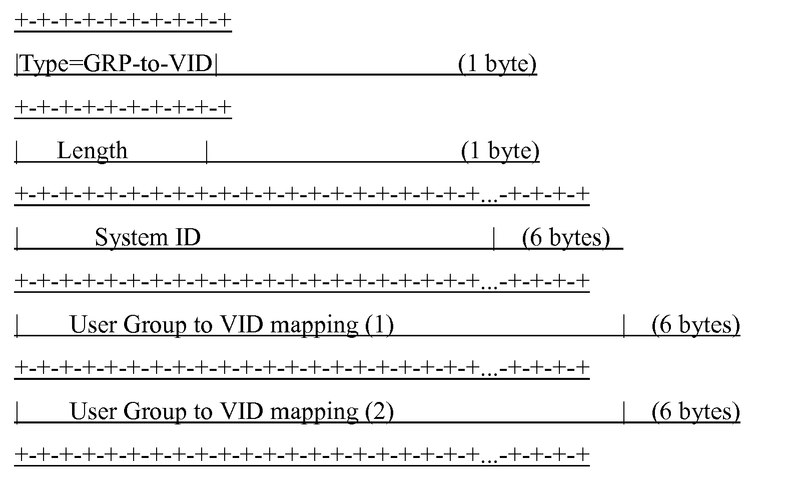

System ID may be a system identity of the RB sending the information, or may also be feature information with uniqueness, such as a nickname; User Group ID is an identity of a designated user group or service, and is also globally unique; Local VID is a value of the local VLAN identity used by a designated user group ID under the RB with the given System ID, and is locally unique.

The format of each User Group to VID mapping is shown as follows:

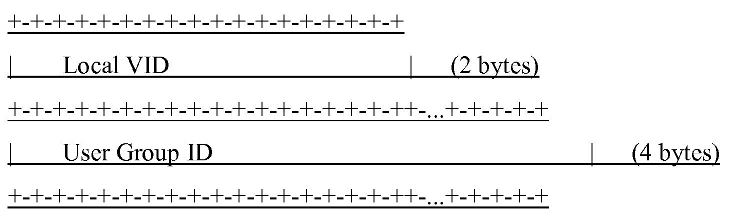

402. Receive a data packet in Transparent Interconnection of Lots of Links protocol encapsulation, sent by a source terminal and forwarded by a neighboring routing bridge.

Referring to FIG. 5, 510 is a virtual switch located between an RB and terminals. When a terminal 508 in the Rack505 needs to send a packet of the service1 to another terminal 509 in the Rack507, the RB501 is an ingress RB (Ingress RB) of the service1, the RB 503 is an egress RB (Egress RB) of the service1, and the RB 502 is an RB that the data packet must pass through from the ingress RB to the egress RB, where the terminal 508 may be called a source terminal, and the terminal 509 may be called a destination terminal. The data packet sent by the source terminal 508 includes the MAC address of the source terminal 508 and the MAC address of the destination terminal 509. When the data packet of the service1 sent by the source terminal 508 arrives at the virtual switch 510, the virtual switch 510 adds the information (VID35) of the VID configured by the Rack505 for the service1 to the data packet. When the data packet arrives at the RB501, the RB 5011 encapsulates the data packet according to the TRILL protocol. The inner-layer VID of the encapsulated data packet remains unchanged, and is still 35. The nickname of the ingress RB is ToR1, and the nickname of the egress RB is ToR3. Outer header encapsulation of the data packet also complies with the TRILL specification, and specifically complies with the prior art, which is not further described herein.

The data packet sent by the source terminal 508 arrives at the egress RB503 through forwarding layer by layer.

403. Query the stored service information table, and convert the virtual local area network identity in the received data packet into a local virtual local area network identity.

The RB503 receives the data packet from the source terminal, reads the egress RB information in the data packet, knows that the egress RB is the RB503 itself, and then performs query according to the identity of the ingress RB and the VID information included in the inner-layer data packet and the service information table stored in step 401, and can obtain the virtual local area network identity of the service1 in the Rack507, namely, the local VID 314 of the service1 on the RB503. Then the RB503 converts the VID35 in the received data packet into a local VID 314.

404. Send the data packet with the converted virtual local area network identity to the destination terminal.

The egress RB, namely, the RB503, sends the data packet with the converted VID to the destination terminal 509.

In the embodiment of the present invention, the RB dynamically obtains and stores the service information table of each routing bridge; after the RB receives a data packet in which the egress RB is the RB itself, the RB queries the stored service information table according to the ingress RB in the data packet and the VID information of the inner-layer packet to obtain information of a local VID to be converted into. This avoids the shortage of VIDs caused by use of a globally unique VID by each service, and a huge configuration workload and configuration lag caused by manual configuration of local VIDs.

Based on the method shown in FIG. 4, after step 404, another embodiment of the present invention further includes: obtaining and storing a medium access control address of the source terminal sending the data packet, the local VID of the service that the data packet belongs to, and a service information table of the ingress RB.

For example, in FIG. 5, the egress RB503 converts the VID corresponding to the ingress RB501 and included in the received data packet into a local VID, and after sending the data packet with the converted VID to the destination terminal 509, obtains and stores the MAC address of the source terminal 508, the local VID314 of the service1, and the service information table of the ingress RB501, that is, learns the source address based on TRILL after the VID is converted, ensuring a correct forwarding process of subsequent data packets and real-time update of the database.

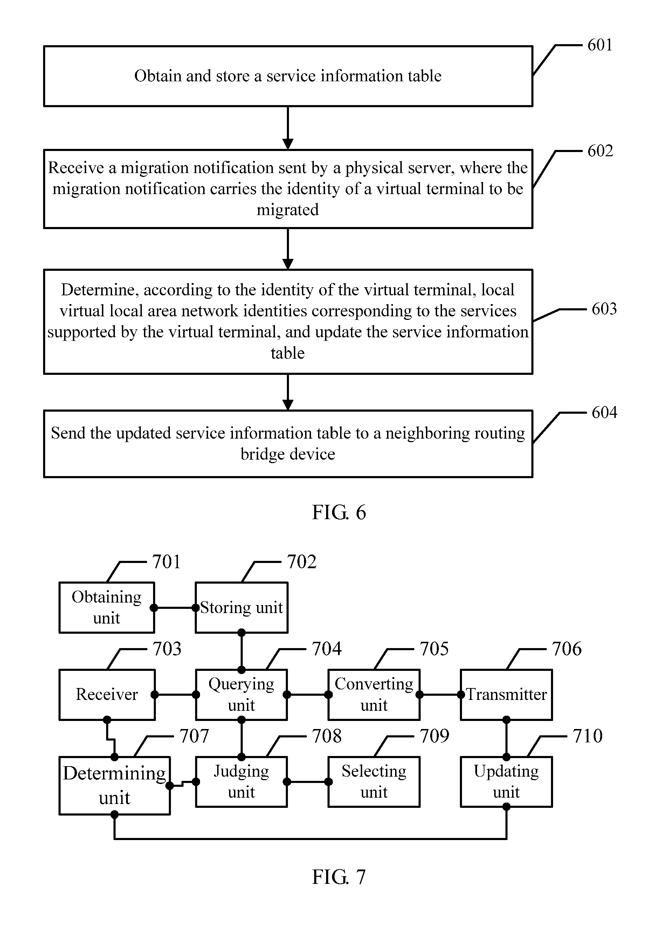

An embodiment of the present invention also provides a method for converting a virtual local area network identity, applicable to a routing bridge. As shown in FIG. 6, the method includes the following:

601. Obtain and store a service information table, where the service information table includes mappings among services supported by the routing bridge, an identity of the routing bridge, and local virtual local area network identities of the services supported by the routing bridge.

When the RB is a top of rack switch of a switch rack, the services supported by the RB include services that the switches under the switch rack can provide, and the local VID corresponding to a service is the VID used by the service under the switch rack.

602. Receive a migration notification sent by a physical server, where the migration notification carries the identity of a virtual terminal to be migrated.

When the terminal in the virtual local area network is a virtual terminal, the virtual terminal may be migrated between different switch racks. When the virtual terminal is ready to be migrated, an adaptation layer of the physical server at the migration destination sends a migration notification to a neighboring RB under the rack to which the virtual terminal is to be migrated, where the migration notification may be a virtual station interface discovery and configuration protocol (VDP, VSI discovery and configuration protocol) message, which carries the identity of the virtual terminal to be migrated.

603. Determine, according to the identity of the virtual terminal carried in the migration notification, local virtual local area network identities corresponding to the services supported by the virtual terminal, and update the service information table.

After receiving the migration notification sent by the physical server at the migration destination of the virtual terminal, the RB determines, according to the identity of the virtual terminal carried in the migration notification, local virtual local area network identities corresponding to the services supported by the virtual terminal.

Specifically, the RB queries, according to the identity of the virtual terminal in the migration notification sent by the physical server, for information (for example, the service number) of all the services supported by the virtual terminal, and judges one by one, according to the found information of the services and stored service information table, whether local VIDs are allocated for the services supported by the virtual terminal, that is, judges whether a terminal supporting a same service as the virtual terminal exists under the rack. If a local VID is already allocated for a service, which indicates that a terminal supporting a same service as the virtual terminal exists under the rack, it is unnecessary to allocate a local VID for the service. If no local VID is allocated for the service supported by the virtual terminal, which indicates that the service is a new service under the rack, it is necessary to select an unused VID from the database as the local VID corresponding to the new service, and update the stored service information table. The updated service information table includes: the services supported by the RB, the identity of the RB, and local VIDs corresponding to all the services supported by the RB after the update.

In this embodiment, a use state of a VID in the system database is managed through a management program. Whether a VID is used is known by query, and based on this, an unused VID may be selected as the local VID corresponding to a new service of the migrated virtual terminal.

604. Send the updated service information table to a neighboring routing bridge, so that the updated service information table is spread in the VLAN.

The following uses FIG. 5 as an example to further describe the above process. Assuming that the terminal 508 is a virtual terminal, and the virtual terminal 508 simultaneously supports two services: the service1 and the service2 (the virtual local area network that the service2 belongs to is not illustrated in FIG. 5). The terminal 509 supports only one service service1. Before the virtual terminal 508 is migrated, the service information table stored on the RB503 is (service1: ToR3, VID314). When the virtual terminal 508 is migrated from the Rack505 to the Rack507, the routing bridge RB503 in the Rack507 receives a migration notification sent by a physical server (not illustrated in FIG. 5), where the migration notification carries an identity of the virtual terminal 508. After receiving the migration notification, the RB503 finds, according to the identity of the virtual terminal 508 carried therein, that the virtual terminal 508 supports services service1 and service2 (the query may be performed through an information server or any other device capable of providing service information, which is not illustrated in FIG. 5). The RB503 queries the stored service information table, and finds that a local VID is already allocated for the service1. Therefore, it is unnecessary to reallocate a local VID for the service1. In addition, the original service information table of the RB503 includes no information of the service2. Therefore, the service2 is a new service under the Rack507, and it is necessary to allocate a local VID, assumed to be a VID2048, for the service2 to use in the Rack507. Thereby, the updated service information table in the RB503 includes two entries (service1: ToR3, VID314) and (service2: ToR3, VID2048). Then, the RB503 sends the updated service information table to the neighboring RB502 through a link state packet, so that the updated service information table is spread in the network and that each RB updates its service information table.

As seen from the above description, the embodiment shown by FIG. 4 mainly reflects the operation of the RB during forwarding of a data packet, and the embodiment shown by FIG. 6 mainly reflects the operation of the RB during updating of a service information table. For the RB, the forwarding of a data packet and updating of a service information table are always performed simultaneously or alternately. Therefore, the steps in the embodiments shown in FIG 4 and FIG. 6 may be combined in any way into a new solution, and are not limited by an execution sequence.

The process of sending the data packet and converting the VID after the virtual terminal is migrated, and the process of learning the source address based on TRILL are the same as those described in the above embodiments, and are not further described herein.

In the embodiments of the present invention, when the virtual terminal leased by the user is migrated, the RB to which the virtual terminal is to be migrated allocates a new local VID for the new service supported by the virtual terminal, updates the local service information table, and spreads the updated service information table in the whole network, implementing the real-time update of the service information table in the whole network and reducing the workload of manual configuration.

The following describes an apparatus for converting a virtual local area network identity according to an embodiment of the present invention, which is used to implement the above method embodiments of the present invention. Referring to FIG. 7, an embodiment of an apparatus for converting a virtual local area network identity according to an embodiment of the present invention includes:
an obtaining unit 701, configured to obtain a service information table sent by each RB (referring to step 401), and further configured to: after a forwarded data packet sent by a source terminal is received and the stored service information table is queried according to an identity of an ingress RB in the data packet and a VID in the data packet, obtain a local VID of a service that the data packet belongs to, and after the data packet sent by the source terminal is forwarded, obtain a medium access control address of the source terminal sending the data packet, the local VID of the service that the data packet belongs to, and a service information table of the ingress RB;
a storing unit 702, configured to store the service information table sent by each RB and obtained by the obtaining unit 701, and store the medium access control address of the source terminal sending the data packet, the local VID of the service that the data packet belongs to, and the service information table of the ingress RB;
a receiver 703, configured to receive the data packet in TRILL encapsulation, sent by the source terminal and forwarded by a neighboring RB (step 403), and receive a migration notification sent by a physical server to which a virtual terminal is to be migrated (step 602);
a querying unit 704, configured to query, according to the identity of the ingress RB carried in the data packet and the VID information included in the inner-layer data packet, the service information table stored by the storing unit 702 (step 403), and further configured to query, according to the identity of the migrated virtual terminal, for information of all services supported by the migrated virtual terminal (step 603);
a converting unit 705, configured to convert the VID carried in the data packet into a local VID according to a query result of the querying unit 704 after querying the service information table (step 403); and
a transmitter 706, configured to send the data packet with the VID converted by the converting unit 705 to a destination terminal (step 404), and further configured to send the service information table of the egress RB to the neighboring RB through a link state packet (step 401), and send the updated service information table to the neighboring RB through a link state packet after the virtual terminal is migrated (step 604).

It should be noted that the apparatus may further include:
a determining unit 707, configured to: after receiving the migration notification sent by the physical server at the migration destination of the virtual terminal, determine, according to the information of the identity of the virtual terminal to be migrated which is carried in the migration notification, local VIDs corresponding to services after the virtual terminal is migrated (step 603);
a judging unit 708, configured to judge one by one, according to the information of the services found by the querying unit 704 and the stored service information table, whether local VIDs are allocated for the services supported by the virtual terminal (step 603);
a selecting unit 709, configured to select unused VIDs from the database as the local VIDs corresponding to the new services when the judging unit 708 determines that the services supported by the virtual terminal are new services (step 603); and
an updating unit 710, configured to update the service information table according to the local VIDs corresponding to the services supported by the migrated virtual terminal (step 603).

The apparatus in the embodiment of the present invention may include different combinations of the above units according to different implemented functions, and not all the above units should be used as the necessary technical features of this apparatus embodiment.

The apparatus in the embodiment of the present invention can dynamically obtain and store the service information table of each routing bridge; after the apparatus receives a data packet in which the egress RB is the apparatus itself, the apparatus queries the stored service information table according to the ingress RB in the data packet and the VID information of the inner-layer packet to obtain information of the local VID to be converted into, and when a virtual machine is migrated, updates the service information table in the whole network in real time. This avoids the shortage of VIDs caused by use of a globally unique VID by each service, and a huge configuration workload and configuration lag caused by manual configuration of local VIDs.

It should be noted that the technical solutions provided by the embodiments of the present invention are also applicable to multicasting or broadcasting a data packet in the network. The steps are almost the same, and are not further described herein.

Persons of ordinary skill in the art may understand that all or part of the steps of the method in the embodiments of the present invention may be implemented by a program instructing relevant hardware. The program may be stored in a computer readable storage medium, and the above mentioned storage medium may be a Read-Only Memory (ROM), a magnetic disk or an optical disk.

Detailed above are a method and an apparatus for converting a virtual local area network identity according to the present invention. With respect to the implementation manner and applicability scope, persons of ordinary skill in the art can make variations without departing from the idea of the embodiments of the present invention. To conclude, the content of the specification shall not be construed as a limitation on the present invention.

## Claims

1. A method for converting a virtual local area network identity, comprising:
obtaining and storing a service information table sent by each routing bridge RB, wherein the service information table comprises mappings among services supported by each RB, an identity of each RB, and local virtual local area network identities VIDs of the services supported by each RB;
receiving a data packet in TRILL encapsulation, sent by a source terminal and forwarded by a neighboring RB;
querying the stored service information table, and converting a VID in the data packet into a local VID; and
sending the data packet with the converted VID to a destination terminal.

2. The method according to claim 1, further comprising:
sending a service information table of an egress RB to the neighboring RB through a link state packet, wherein the service information table comprises mappings among services supported by the egress RB, an identity of the egress RB, and local VIDs of the egress RB.

3. The method according to claim 1, wherein the querying the stored service information table, and converting a VID in the data packet into a local VID comprises:
querying the stored service information table according to an identity of an ingress RB in the data packet and the VID in the data packet, and obtaining a local VID of a service that the data packet belongs to; and
converting the VID in the data packet into the local VID.

4. The method according to any one of claims 1 to 3, wherein after the sending the data packet with the converted VID to a destination terminal, the method comprises:
obtaining and storing a medium access control address of the source terminal, the local VID of the service that the data packet belongs to, and a service information table of the ingress RB.

5. The method according to claim 1, further comprising:
after receiving a migration notification sent by a physical server at a migration destination of a virtual terminal, determining, according to an identity of the migrated virtual terminal carried in the migration notification, local VIDs corresponding to services supported by the virtual terminal.

6. The method according to claim 5, wherein the determining, according to an identity of the migrated virtual terminal carried in the migration notification, local VIDs corresponding to services supported by the virtual terminal comprises:
querying, according to the identity of the virtual terminal, for information of all services supported by the virtual terminal; and
judging, according to the found information of the services, whether local VIDs are allocated for all the services supported by the virtual terminal, and for a new service not allocated with a local VID, selecting an unused VID from a database as a local VID corresponding to the new service.

7. The method according to claim 5, wherein after the determining local VIDs corresponding to services supported by the virtual terminal, the method comprises:
updating the service information table according to the local VIDs corresponding to the services supported by the virtual terminal, and sending the updated service information table to the neighboring RB through a link state packet.

8. An apparatus for converting a virtual local area network identity, comprising:
an obtaining unit, configured to obtain a service information table sent by each RB;
a storing unit, configured to store the service information table sent by each RB and obtained by the obtaining unit;
a receiver, configured to receive a data packet in TRILL encapsulation, sent by a source terminal and forwarded by a neighboring RB;
a querying unit, configured to query the service information table stored by the storing unit;
a converting unit, configured to convert a VID carried in the data packet into a local VID according to a query result of the querying unit after querying the service information table; and
a transmitter, configured to send the data packet with the converted VID to a destination terminal.

9. The apparatus according to claim 8, wherein:
the transmitter is further configured to send a service information table of an egress RB to the neighboring RB through a link state packet, and after the service information table is updated according to local VIDs corresponding to services supported by a migrated virtual terminal, send the updated service table to the neighboring RB through a link state packet.

10. The apparatus according to claim 8 or 9, wherein:
the obtaining unit is further configured to: after the querying unit queries the stored service information table according to an identity of an ingress RB in the data packet and the VID in the data packet, obtain a local VID of a service that the data packet belongs to, and after the data packet sent by the source terminal is forwarded, obtain a medium access control address of the source terminal, the VID of the service that the data packet belongs to, and a service information table of the ingress RB;
the storing unit is further configured to store the medium access control address of the source terminal, the local VID of the service that the data packet belongs to, and the service information table of the ingress RB, which are obtained by the obtaining unit; and
the querying unit is further configured to query the stored service information table according to the identity of the ingress RB in the data packet and the VID in the data packet, and query, according to information of an identity of the migrated virtual terminal, for information of all services supported by the virtual terminal.

11. The apparatus according to claim 8, further comprising:
a determining unit, configured to: after receiving a migration notification sent by a physical server at a migration destination of a virtual terminal, determine, according to the identity of the migrated virtual terminal carried in the migration notification, local VIDs corresponding to services supported by the virtual terminal.

12. The apparatus according to claim 11, further comprising:
a judging unit, configured to judge, according to the found information of the services, whether local VIDs are allocated for all the services supported by the virtual terminal;
a selecting unit, configured to: for a new service not allocated with a local VID, select an unused VID from a database as a local VID corresponding to the new services; and
an updating unit, configured to update the service information table according to the local VIDs corresponding to the services supported by the virtual terminal.
